(19) Europäisches Patentamt
European Patent Office
Office européen des brevets

(11) Publication number: 0 228 798 B1

(12) # EUROPEAN PATENT SPECIFICATION

(45) Date of publication of patent specification: **13.03.91**

(51) Int. Cl.5: **C08F 220/56**, C08F 8/12, //(C08F220/56,220:54)

(21) Application number: **86308943.9**

(22) Date of filing: **17.11.86**

(54) **Acrylamide/alkylacrylamide acrylate terpolymer and process for its preparation.**

(30) Priority: **25.11.85 US 801226**
**25.11.85 US 801331**

(43) Date of publication of application:
**15.07.87 Bulletin 87/29**

(45) Publication of the grant of the patent:
**13.03.91 Bulletin 91/11**

(84) Designated Contracting States:
**BE DE FR GB IT NL**

(56) References cited:
**EP-A- 0 115 213**
**EP-A- 0 115 703**

(73) Proprietor: **EXXON RESEARCH AND ENGINEERING COMPANY**
**P.O.Box 390, 180 Park Avenue**
**Florham Park, New Jersey 07932(US)**

(72) Inventor: **Bock, Jan**
**500 Juniper Lane**
**Bridgewater, NJ 08802(US)**
Inventor: **Siano, Donald Bruce**
**157D Sutton Road**
**Lebanon, NJ 08833(US)**
Inventor: **Turner, Sam Richard**
**4 Wood Stone Rise**
**Pittsford, NY 14534(US)**

(74) Representative: **Fletcher Watts, Susan J. et al**
**ESSO Engineering (Europe) Ltd. Patents & Licences Mailpoint 72 Esso House Ermyn Way**
**Leatherhead, Surrey KT22 8XE(GB)**

EP 0 228 798 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to acrylamide/alkyl acrylamide polymers, and more especially to water-soluble polymers thereof, capable of viscosifying water or brine.

Copolymers of acrylamide and alkylacrylamide and their method of preparation are described in EP-A-115,703 and EP-A-115,213. The present invention provides terpolymers prepared from monomers of acrylamide and alkylacrylamide, and provides the terpolymers in a form substantially free from particulates of latexes of water-insoluble polymers. Such products would overcome a problem in, for example, secondary oil recovery, where pore plugging occurs when particulates are present in the polymer used as viscosifying agent.

The invention, in one aspect, provides a homogenous micellar redox polymerization process for the formation of a terpolymer from monomers comprising acrylamide and alkylacrylamide, characterised by:

(a) forming a homogenous mixture of a surfactant, acrylamide, water and an oil soluble higher alylacrylamide of the formula $CH_2CHCONR_1R_2$ where $R_1$ is a $C_6$ to $C_{22}$ straight chain or branched alkyl or cycloalkyl group, and $R_2$ is the same or different alkyl group as $R_1$ or hydrogen, wherein the concentration of acrylamide is about 9 to 40 weight percent, the concentration of the alkylacrylamide is 0.01 to 4 weight percent and the concentration of the surfactant is 1 to 15 weight percent such that it solubilizes the oil soluble monomer to give a clear, isotropic homogenous polymerization mixture;

(b) deoxygenating said homogenous reaction mixture by replacing the oxygen with an inert gas;

(c) adding a water soluble redox catalyst initiator in a concentration of 0.01 to 0.1 grams per hundred grams of monomers to the said deoxygenated homogenous reaction mixture to cause polymerization of said deoxygenated homogenous mixture at a temperature maintained below 40 °C without the formation of substantial amounts of particulates or a separate phase; the resultant copolymer having an intrinsic viscosity of at least about 12 dl/g in 2 weight percent aqueous NaC1 solution; and

(d) converting the resultant copolymer to a terpolymer by either hydrolysing the copolymer by the addition of an alkali metal hydroxide, or by copolymerising the copolymer with acrylic acid and subsequently neutralizing it with a base.

The process for synthesizing them relies on the complete solubilization of the water insoluble monomer into an aqueous solution of the water soluble monomer(s) by means of a suitable water soluble surfactant. A redox initiator system is used in conjunction with high monomer concentration and a low reaction temperature. The surfactant chosen and its concentration is one that produces a clear, uniform, homogeneous mixture in the presence of the monomers and gives a product which remains a clear, uniform, homogeneous mixture with no phase separation as the reaction proceeds toward completion. The molecular weight of the resulting polymer after isolation from the surfactant is sufficiently high that it gives an intrinsic viscosity greater than about 12 dl/g.

Novel polymers provided by another aspect of this invention are terpolymers of acrylamide, an alkylacrylamide and a salt of an acrylic acid, characterised by the formula:

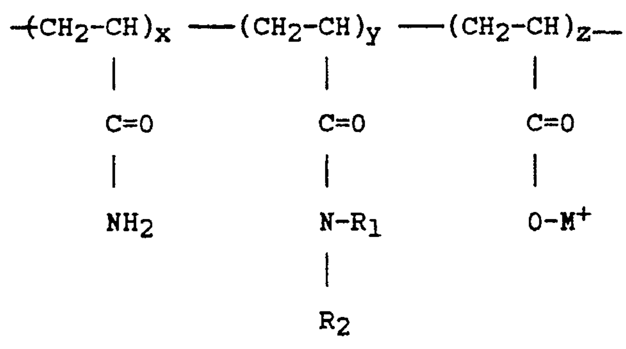

wherein $R_1$ is preferably a $C_6$ to $C_{22}$ straight chain or branched alkyl or cyclo group, more preferably $C_6$ to $C_{20}$, and most preferably $C_6$ to $C_{18}$; and $R_2$ is the same or different alkyl group as $R_1$, or hydrogen; and $M^+$ is an alkali metal or ammonium cation. Non-limiting, examples of preferred alkyl groups are hexyl, octyl, decyl, dodecyl and hexadecyl groups. Typical, but non-limiting, examples of preferred cations are sodium, potassium and ammonium. The mole fraction of acrylamide, x, is preferably 0.50 to 0.999, more preferably 0.60 to 0.995, and most preferably 0.70 to 0.995. The mole fraction of the n-alkyl acrylamide, y, is preferably 0.001 to 0.10, more preferably 0.002 to 0.05, most preferably 0.002 to 0.02,e.g.0.0075.The mole fraction of the metal salt of the acrylic acid salt, z, is preferably 0.0 to 0.5, more preferably 0.05 to 0.4, and

most preferably 0.01 to about 0.30.

The polymers are sufficiently high in molecular weight to give an intrinsic viscosity measured in 2 weight percent of NaCl at 25 °C of at least 12 dl/g. Thus, the weight average molecular weights of the terpolymers are greater than about 8 million.

The process of this invention enables the copolymerization of the water soluble monomer, acrylamide and water insoluble monomers, i.e. an oil-soluble alkylacrylamide, to give copolymers which are very efficient viscosifiers of water and brine. The process relies on cosolubilizing the water insoluble monomer into a predominantly aqueous media by the use of a suitable water soluble surfactant, such as sodium dodecyl sulfate. When mixed with an aqueous solution of the water soluble monomer, the surfactant solution can disperse the water insoluble monomer on an extremely fine scale so that the reaction mixture is isotropic, clear and homogeneous. These micellar reaction mixtures are free of visible oil droplets or particulates of the water insoluble monomer. The polymerization can, therefore, be initiated by water soluble initiators to give copolymers that are substantially free of visible particulates. The resultant reaction product remains homogeneous throughout the course of the reaction.

Micelles formed by the surfactant which solubilize the water insoluble monomer are generally very small aggregates which consist of on the order of 50 to 200 molecules. They form spontaneously upon mixing the components together, i.e., they do not require the vigorous mixing conditions required in conventional emulsion polymerization in which macroemulsions are formed. The macroemulsion droplets of the conventional emulsion polymerization process have diameters which are at least one µm. They, therefore, tend to phase separate upon standing, leading to undesirable inhomogeneities in the produced copolymer. The homogeneous micellar reaction mixture is, on the other hand, much more stable against dimixing than the formulations used in emulsion polymerization processes. Indeed, no stirring is required during the course of the micellar copolymerization. The micellar aggregates remain extremely finely dispersed throughout. Moreover the extremely dispersed nature of the micellar aggregate permits the copolymerization to occur in such a way that a water soluble copolymer is produced which does not contain particulates or latexes of water insoluble polymers. These would be detrimental in such applications as secondary oil recovery, which requires a product which is substantially free of pore plugging particulates.

The surfactants which may be used in this process may be one or more of the water soluble surfactants, such as salts of alkyl sulfates, sulfonates and carboxylates, or alkyl arene sulfates, sulfonates or carboxylates. Preferred surfactants are sodium and potassium salts of decyl sulfate, dodecyl sulfate or tetradecyl sulfate. Most preferred is sodium dodecyl sulfate. For these ionic surfactants the Krafft point temperature (defined as the temperature minimum required for micelle formation) must be below the temperature used for the polymerization in order for micelles of the surfactant to form. Nonionic surfactants can also be used for solubilizing the oil soluble alkylacrylamide. For example, ethoxylated alcohols, ethoxylated alkyl phenols, ethylene oxide-propylene oxide copolymers and polyoxyethylene ethers and esters and the like can be used. Surfactants which contain both nonionic and anionic functionality, e.g., sulfates and sulfonates of ethoxylated alcohol and alkyl phenols, can also be used.

Combinations of these surfactants may also be used -- the requirement in either case is that the surfactant(s) solubilize the oil soluble monomer to give a clear, isotropic homogeneous polymerization mixture. The actual concentration of the surfactant(s) chosen in any particular case will be determined by this requirement. An additional requirement for the surfactant is that it not be one which acts as chain transfer agent for the reaction to any strong degree so that the polymerization may proceed to the maximum extent without premature chain termination in order for the desired very high molecular weights to be produced.

The copolymers of the present invention are prepared by using a particular redox catalyst system. It is composed of a water soluble tertiary amine, triethylamine, as the reducing agent in combination with a water-soluble persulfate, such as an alkali metal or ammonium persulfate, as the oxidizing agent. When this particular catalyst system is used under the right conditions of temperature and the right concentrations of all of the components of the polymerization mixture, and the polymerization is carried out for a sufficient time, it is possible to obtain copolymers of acrylamide and oil soluble alkylacrylamide that are soluble in water, free of particulates or gel of insoluble polymer, that has the desired very high molecular weight. The mole ratio of the persulfate to triethylamine should be 2 to 6, with a mole ratio of about 4 to be preferred. The concentration of the redox catalyst mixture is 0.1 to 0.01 grams per hundred grams of monomer and the monomers comprise 10 to 50 weight percent of the reaction solution. The surfactant used is about one-third or less of the weight of the monomers. The polymerization is conducted in the absence of oxygen at a temperature from 5 °C to 30 °C for at least 6 hours. Other redox type initiators may also be used in this invention. These may be prepared by combining a peroxide such as hydrogen peroxide, an alkyl peroxide, or a persulfate such as potassium or ammonium persulfate with a reducing agent such as a tertiary amine,

a sulfite, a ferrous or ferric salt and/or an azoinitiator such as azobisisorbutyronitrile.

The copolymer may be recovered from the reaction mixture by precipitation with non-solvents for the polymer, such as acetone or methanol. Alternatively, the polymer may be recovered by drying the reaction mixture with heated air or nitrogen. For some uses it may not be necessary to separate the pure polymer from the reaction mixture, but instead a dilution of the reaction mixture may be used.

The hydrolysis of the preformed copolymer may be carried out by the addition of an alkali metal hydroxide to the solution for such a period of time and temperature, at a concentration sufficient to cause the desired degree of hydrolysis to form the terpolymer of acrylamide, N-alkylacrylamide, metal salt of acrylic acid. Alternatively, the acid functionality may be introduced into the polymer by copolymerizing it with acrylic acid and subsequently neutralizing it with a stoichiometric amount of base.

The polyacrylamides of this invention have been found to be useful for thickening aqueous fluids. To prepare these thickened fluids, an amount of the copolymer may be dissolved into the fluid by mixing or agitation, using any of a number of techniques well known in the art. It is desirable to use relatively low agitation conditions since these terpolymers have a tendency to cause and stabilize foams which can be difficult to break. The aqueous solutions may contain inorganic salts, particulates or other additives. A preferred method for preparing thickened brine solutions having a salt concentration of about 0.1 to about 10.0 weight percent (NaCl) involves first preparing a concentrated solution of the polymer in relatively fresh water and then adding a more concentrated brine solution. The amount of the terpolymer required to produce a given amount of thickening will depend upon the composition of the brine and the temperature. Preferably, 0.001 to 2 weight percent, more preferably 0.005 to 1.0 weight percent, and most preferably 0.01 to 0.5 weight percent copolymer provides the desired level of viscosification.

Measurement of the dilute solution viscosity can be made with conventional Couette, capillary or other viscometers. For the Examples given below, a Contraves low shear viscometer, Model LS-30, together with a No. 1 cup and No. 1 bob were used. Temperatures were controlled to ± 0.1 °C and measurements were made at a rotational speed corresponding to a shear rate of 1.28 $s^{-1}$. In contrast to conventional water soluble polymers, the polymers of this invention often exhibit long relaxation times under shear, so relatively long measurement times were employed to give equilibrium shear stresses.

## DESCRIPTION OF THE PREFERRED EMBODIMENT

The following examples explain the invention, which are by way of illustration, but not of limitation.

### Comparative Example 1 - Polyacrylamide

A one liter water jacketed reaction flask with a mechanical stirrer made of glass and a teflon blade was used as a polymerization vessel. Fifty grams of twice recrystallized (from acetone) acrylamide was added and the flask was twice alternately evacuated and purged with nitrogen. The nitrogen was purified by passing it through a filter to remove particulates and a pyrogallol solution to remove residual oxygen. Next, 500 ml of boiled, deionized water was added and the vacuum-$N_2$ purge was carried out twice more. When dissolution was complete and the temperature was brought to 20 °C, 0.020 g of solid $K_2S_2O_8$ and then 0.10 ml of a solution containing 0.0028 g of triethylamine were added (this gives a mole ratio of $K_2S_2O_8$ to TEA of 4:1). The stirring was discontinued about three hours after the initiator was added. The reaction was continued over night while the nitrogen was bubbled slowly into the mixture. The product was a rubbery, slightly hazy solid. A portion of it was cut up with scissors into pieces a few mm on a side and diluted with deionized water to give a solution of 2,000 ppm polymer. The dissolution was accomplished over night. No haze or particulates were observed in the solutions. The solution was brought to a concentration of 2 weight percent NaCl by the addition of solid NaCl. The viscosity at a shear rate of 1.28 $s^{-1}$ was 30.7 mPa.s. A portion diluted to 1,500 ppm gave 15.2 mPa.s and another portion diluted to 500 ppm gave 2.3 mPa.s. It gave an intrinsic viscosity of 28 dl/g and a Huggins constant of 0.46. This value of the Huggins' constant is close to the values previously determined for homopolyacrylamides with lower intrinsic viscosities. The highest previously reported value for the intrinsic viscosity of polyacrylamide is 26 dl/g.

### Example I - Acrylamide/Octylacrylamide/(99.25)//0.75 Mole Percent Copolymer

The same procedure was followed as in Comparative Example 1, except that the weights of components were, in the order of addition:

| Component | Weight (Grams) | Molecular Weight | Moles |
|---|---|---|---|
| Acrylamide | 49.04 | 71.1 | 0.690 |
| Octylacrylamide | 0.96 | 183.0 | $5.25 \times 10^{-3}$ |
| Sodium Dodecylsulfate | 15.85 | 288.0 | $55.0 \times 10^{-3}$ |
| Potassium Persulfate | 0.020 | 270.3 | $7.4 \times 10^{-5}$ |
| Triethylamine | 0.0028 | 149.2 | $1.88 \times 10^{-5}$ |

The 500 ml of deionized, boiled water was added after the sodium dodecylsulfate. In order for complete dissolution to occur the solution was heated briefly to 35° C, then lowered to 20° C. The viscosity visibly increased about two hours after the addition of the initiators. The stirring was then terminated and the bubbling tube was raised above the solution. The reaction product was removed 18 hours after the initiator was added. The product was a clear, rubbery solid. A dilution to one weight percent of polymer did not completely dissolve in water, even after two weeks of stirring. A similar result was found at 2,000 ppm --the polymer formed a weak gel which could be seen by the inhomogeneous appearance of the thin sheet of solution formed when the container was tilted. However, at 500 ppm a clear solution could be formed and its viscosity in 2% NaCl was 2.2 mPa.s, which gives a reduced viscosity of 28 dl/g.

Example II - Hydrolyzed Acrylamide/Octyl Acrylamide Copolymer

Polymer from Example I was diluted to 2,000 ppm of polymer (based upon the assumption of 100% conversion) and an equal number of moles of NaOH was added and the solution was heated to 40° C for 23 hours. The polymer was precipitated with an equal volume of methanol and redissolved into a volume of water equal to the original volume. It was then placed into dialysis tubing and dialyzed exhaustively against water. A water-clear solution was found after this process. A solution with a concentration of about 1,000 ppm was sonicated to reduce the viscosity, passed through a mixed bed ion exchange column in order to put the polymer into the acid form, then titrated with NaOH. The concentration of the effluent from the column was determined gravimetrically and the degree of hydrolysis was found to be 14%. The intrinsic viscosity was 28 dl/g. Although the intrinsic viscosity is nearly the same as that found for the homopolyacrylamides of Comparative Example 1, the Huggins' constant was very high -- it had a value of 3.0. The high value of the Huggins' constant found for this polymer also implies that at low concentrations its viscosification efficiency is higher than for polymers which are non-associating (like that of comparative example 1) and therefore have Huggins' constants of less than about 0.8. The high value of the Huggins' constant also indicates that the terpolymer of acrylamide, octylacrylamide and sodium acrylate associates in aqueous solution.

Examples III-VIII - Acrylamide-Octylacrylamide Copolymers Having Varing Degrees of Hydrolysis

Other degrees of hydrolysis of polymer from Example 1 were prepared by a similar method to that used in Example II by using 4N to 0.1 N NaOH for different lengths of time. The conditions used are summarized in Table I and some of their properties are described in Table II. The data in Table II is arranged in order of increasing degree of hydrolysis, given in the first column. The second column gives the results of measurements of the viscosity of samples at 500 ppm in 2% NaCl at 25° C at a shear rate of 1.28 $s^{-1}$. All of these values are greater than the values found for the non-associating polymer given in Example 1, demonstrating the superior viscosifying efficiency of the associating, hydrolyzed copolymer. The next two columns give the intrinsic viscosity and the Huggins' constant of several of the polymers dissolved in 2% NaCl as measured by the Contraves viscometer. Two of the three cases gave extremely high values for the intrinsic viscosity. At the higher degrees of hydrolysis, the Huggins' constant was found to be decreased.

A supplementary measure of the viscosification efficiency is the screen factor. This is a ratio of the time

required for a solution of the polymer to pass through five 200 mesh screens to the time required for passage of the solvent. It is a measure of the resistance of the fluid to elongational flow. This is given for several of the solutions at a polymer concentration of 1000 ppm in 2% NaCl in the last column of Table II. All of these were greater than 9, which was the value found for the unhydrolyzed, non-associating polymer of Comparative Example 1.

Example IX - Hydrolyzed Acrylamide-Octylacrylamide Copolymer

Into a two liter polymerization vessel 73.56 g of acrylamide (twice recrystallized from methanol), 1.44 g of octylacrylamide, and 23.78 g of sodium dodecyl sulfate were added. The vessel was purged of oxygen by alternately pulling a vacuum and flushing with nitrogen that had been bubbled through a basic pyrogallol solution. Then 750 g of boiled, deionized water was added and the purging process carried out six more times. The monomers were dissolved by stirring and heating to 35 °C for 20 minutes. It was then cooled back to 20 °C and nitrogen bubbled through the solution for two hours. The initiator, 0.0028 g of triethylamine and 0.020 g of potassium persulfate, each dissolved separately in 1 ml of water, was then added. Within 30 minutes the solution had noticeably thickened, and the polymerization was carried out for an additional 18 hours. The polymer was then removed from the flask as a solid, rubbery gel. To carry out the hydrolysis of the copolymer 400 g, the gel was macerated into small pieces and placed in 2,000 ml of deionized water. After stirring for 150 minutes 13 g of sodium hydroxide was added and kept at a temperature of 50 °C for 90 minutes. While still at 50 °C the polymer was precipitated by the addition of an excess of methanol. It was washed with a Waring blender for 10 seconds, the methanol filtered off and the polymer was rinsed twice in methanol. It was then dried in a vacuum oven overnight at room temperature.

The degree of hydrolysis of the polymer was determined by a potentiometric titration of a small sample that had been passed through both anionic and cationic ion exchange resins, and found to be 16%. The intrinsic viscosity in brine containing 3 weight percent Nacl and 0.3 weight percent $CaCl_2$ was 19 dl/g.

TABLE I

| Polymer | Hydrolysis Time Hours | Hydrolysis Temperature °C | Percent Polymer Concentration | NaOH Concentration | Percent Hydrolysis |
|---|---|---|---|---|---|
| Example II | 23 | 40 | 0.2 | 0.028 N | 14 |
| Example III | 21 | 35 | 2.0 | 4 | 59 |
| Example IV | 70 | 35 | 2.0 | 4 | 70 |
| Example V | 1 | 35 | 2.0 | 4 | 41 |
| Example VI | 0.5 | 35 | 2.0 | 1 | 16 |
| Example VII | 1 | 35 | 2.0 | 0.01 | 3 |
| Example VIII | 1 | 35 | 2.0 | 0.04 | 6 |

TABLE II

| Percent Hydrolysis | $N(1.28\ s^{-1})$ 500ppm | [η] dl/g | $k_h$ | Screen Factor (1,000 ppm) |
|---|---|---|---|---|
| 3 | 8.0 mPas | - | - | 29 |
| 6 | 14.0 | - | - | - |
| 14 | 7.1 | 28 | 3.0 | 11 |
| 16 | 6.0 | - | - | - |
| 41 | 5.9 | 75 | 0.20 | 17 |
| 59 | 2.6 | 69 | 0.10 | 14 |
| 70 | 4.0 | - | - | 30 |

## Claims

1. A homogenous micellar redox polymerization process for the formation of a terpolymer from monomers comprising acrylamide and alylacrylamide, characterised by:

(a) forming a homogenous mixture of a surfactant, acrylamide, water and an oil soluble higher alkylacrylamide of the formula $CH_2CHCONR_1R_2$ where $R_1$ is a $C_6$ to $C_{22}$ straight chain or branched alkyl or cycloalkyl group, and $R_2$ is the same or different alkyl group as $R_1$ or hydrogen, wherein the

concentration of acrylamide is about 9 to 40 weight percent, the concentration of the alkylacrylamide is 0.01 to 4 weight percent and the concentration of the surfactant is 1 to 15 weight percent such that it solubilizes the oil soluble monomer to give a clear, isotropic homogenous polymerization mixture;

(b) deoxygenating said homogenous reaction mixture by replacing the oxygen with an inert gas;

(c) adding a water soluble redox catalyst initiator in a concentration of 0.01 to 0.1 grams per hundred grams of monomers to the said deoxygenated homogenous reaction mixture to cause polymerization of said deoxygenated homogenous mixture at a temperature maintained below 40° C without the formation of substantial amounts of particulates or a separate phase; the resultant copolymer having an intrinsic viscosity of at least about 12 dl/g in 2 weight percent aqueous NaCl solution; and

(d) converting the resultant copolymer to a terpolymer by either hydrolysing the copolymer by the addition of an alkali metal hydroxide, or by copolymerising the copolymer with acrylic acid and subsequently neutralizing it with a base.

2. A process according to claim 1 comprising the further step of separating product polymers from the other components of the reaction mixture by the addition of a nonsolvent for the polymer.

3. A process according to any preceding claim, wherein the surfactant is sodium dodecyl sulfate.

4. A method according to any preceding claim, wherein the redox initiator is a combination of potassium or ammonium persulfate and triethylamine.

5. A method according to any preceding claim, wherein the alkylacrylamide is octyl or decyl acrylamide.

6. A terpolymer characterised by the formula:

```
-(CH2-CH)x ---(CH2-CH)y ---(CH2-CH)z--
    |            |            |
   C=O          C=O          C=O
    |            |            |
   NH2          N-R1         O-M+
                 |
                 R2
```

wherein $R_1$ is straight chain or branched alkyl or cycloalkyl group, preferably $C_6$ to $C_{22}$; $R_2$ is the same or different alyl group as $R_1$, or hydrogen;$M^+$ is an alkali metal or ammonium; and wherein x is at least 0.50, y is 0.001 to 0.05, and z is 0.05 to 0.4; and further characterised in that the intrinsic viscosity of the terpolymer dissolved in 2% aqueous NaCl solution is greater than 12 dl/g.

7. A composition characterised by containing a terpolymer according to claim 6 dissolved in a brine solution.

8. A composition according to claim 7, containing 0.1 wt % of sodium chloride.

9. A composition according to claim 7 or claim 8, containing 0.001 to 2 wt % of said terpolymer.

## Revendications

1. Procédé de polymérisation redox micellaire homogène,pour la formation d'un terpolymère à partir de monomères comprenant l'acrylamide et un alkylacrylamide,ce procédé étant caractérisé en ce que :

(a) on forme un mélange homogène d'un surfactif, d'acrylamide, d'eau et d'un alkylacrylamide supérieur,soluble dans de l'huile et de formule $CH_2CHCONR_1R_2$ , (dans laquelle $R_1$ représente un groupe alkyle linéaire ou ramifié , ou cycloalkyle,en $C_6$ à $C_{22}$ , et $R_2$ est un groupe alkyle identique à $R_1$

ou différent ou est un atome d'hydrogène ) ,la concentration de l'acrylamide étant d'environ 9 à 40 % en poids , la concentration de l'alkylacrylamide étant de 0,01 à 4 % en poids et la concentration du surfactif étant de 1 à 15 % en poids de manière à solubiliser le monomère soluble dans l'huile de façon à donner un mélange de polymérisation limpide , isotrope et homogène ;

(b) on désoxygène ledit mélange réactionnel homogène en remplaçant l'oxygène par un gaz inerte ;

(c) on ajoute , en une concentration de 0,01 à 0,1 gramme, pour cent grammes de monomères , un amorceur , catalyseur rédox hydrosoluble, audit mélange réactionnel homogène désoxygéné, pour provoquer la polymérisation dudit mélange homogène désoxygéné à une température maintenue au dessous de 40° C ,sans la formation de grande quantités de particules ou d'une phase séparée ; le copolymère résultant ayant une viscosité intrinsèque d'au moins 12 dl/,environ, dans une solution aqueuse de NaCl à 2 % en poids ; et

(d) on convertit le copolymère résultant en un terpolymère en hydrolysant le copolymère par l'addition d'un hydroxyde de métal alcalin , ou bien en copolymérisant le copolymère avec l'acide acrylique et en neutralisant ensuite avec une base.

2. Procédé selon la revendication 1 , comprenant l'étape supplémentaire consistant à séparer des polymères produits d'avec les autres constituants du mélange réactionnel par l'addition d'un non solvant du polymère.

3. Procédé selon l'une quelconque des revendications précédentes, dans lequel le surfactif est le dodécyl sulfate de sodium.

4. Procédé selon l'une quelconque des revendications précédentes, dans lequel l'amorceur Redox est une combinaison de persulfate de potas - sium ou d'ammonium et de triéthylamine.

5. Procédé selon l'une quelconque des revendications précédentes, dans lequel l'alkylacrylamide est l' octyl acrylamide ou le décyl acryl - amide.

6. Terpolymère caractérisé par la formule:

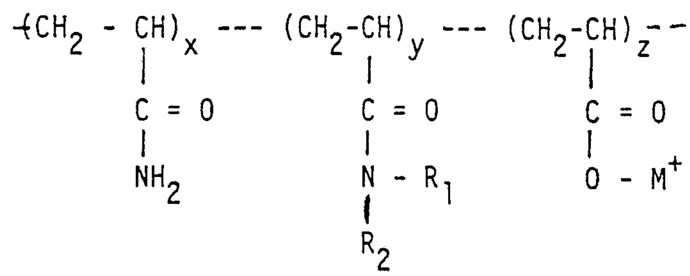

dans laquelle $R_1$ représente un groupe alkyle linéaire ou ramifié ou cycloalkyle,de préférence en $C_6$ à $C_{22}$; $R_2$ représente le même groupe alkyle que $R_1$ ou un groupe alkyle différent, ou un atome d'hydrogène ; $M^+$ représente un métal alcalin ou un groupe ammonium; et x vaut au moins 0,50 , y vaut de 0,001 à 0,05 et z vaut de 0,05 à 0,4; le terpolymère étant caractérisé en outre en ce que la viscosité intrinsèque du terpolymère,dissous dans une solution aqueuse de NaCl à 2% , est supérieure à 12 dl/g.

7. Composition caractérisée en ce qu'elle contient un terpolymère selon la revendication 6 ,dissous dans une solution de saumure.

8. Composition selon la revendication 7 ,contenant 0,1 % en poids de chlorure de sodium.

9. Composition selon la revendication 7 ou la revendication 8 , contenant 0,001 à 2% en poids dudit terpolymère.

**Ansprüche**

1. Homogenes micellares Redox-Polymerisationsverfahren zur Bildung eines Terpolymers aus Monomeren umfassend Acrylamid und Alkylacrylamid, **gekennzeichnet** durch
   (a) Bilden einer homogenen Mischung aus einem oberflächenaktiven Mittel, Acrylamid, Wasser und einem öllöslichen höheren Alkylacrylamid mit der Formel $CH_2CHCONR_1R_2$, worin $R_1$ eine geradkettige oder verzweigte $C_6$- bis $C_{22}$-Alkyl-oder Cycloalkylgruppe ist, und $R_2$ die gleiche oder eine von $R_1$ verschiedene Alkylgruppe oder Wasserstoff ist, wobei die Konzentration an Acrylamid etwa 9 bis 40 Gew.% beträgt, die Konzentration an Alkylacrylamid 0,01 bis 4 Gew.% beträgt und die Konzentration an oberflächenaktivem Mittel 1 bis 15 Gew.% beträgt, so daß es das öllösliche Monomer unter Erhalt einer klaren, isotropisch homogenen Polymerisationsmischung solubilisiert;
   (b) Entziehen des Sauerstoffs der homogenen Reaktionsmischung durch Ersetzen des Sauerstoffs durch ein inertes Gas;
   (c) Hinzufügen eines wasserlöslichen Redox-Katalyseinitiators in einer Konzentration von 0,01 bis 0,1 g pro 100 g an Monomeren zu der homogenen Reaktionsmischung, der der Sauerstoff entzogen wurde, um die Polymerisation der homogenen Mischung bei einer unterhalb von 40 °C gehaltenen Temperatur ohne Bildung von wesentlichen Mengen an teilchenförmigem Material oder einer separaten Phase zu bewirken, wobei das resultierende Copolymer eine Grenzviskosität von mindestens etwa 12 dl/g in einer 2 Gew.%-igen wäßrigen NaCl-Lösung aufweist; und
   \- Umwandeln des resultierenden Copolymers in ein Terpolymer entweder durch Hydrolysieren
   (d) des Copolymers durch Zugabe eines Alkalimetallhydroxids oder durch Copolymerisieren des Copolymers mit Acrylsäure und anschließendes Neutralisieren mit einer Base.

2. Verfahren nach Anspruch 1, bei dem in einer weiteren Verfahrensstufe Produktpolymere von den anderen Komponenten der Reaktionsmischung durch die Zugabe eines Nicht-Lösungsmittels für das Polymer abgetrennt werden.

3. Verfahren nach einem der vorherigen Ansprüche, bei dem das oberflächenaktive Mittel Natriumdodecylsulfat ist.

4. Verfahren nach einem der vorherigen Ansprüche, bei dem der Redox-Initiator eine Kombination aus Kalium- oder Ammoniumpersulfat und Triethylamin ist.

5. Verfahren nach einem der vorherigen Ansprüchen, bei dem das Alkylacrylamid Octyl- oder Decylacrylamid ist.

6. Terpolymer, **gekennzeichnet** durch die Formel:

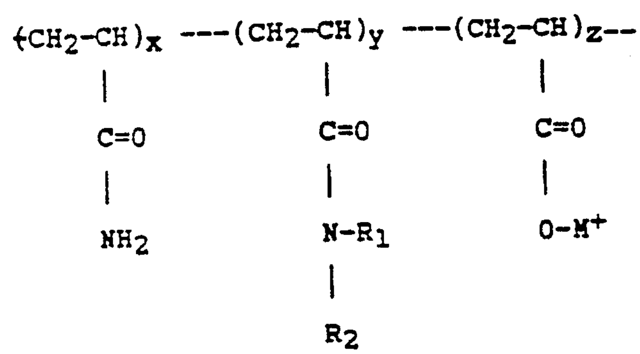

   worin $R_1$ eine geradkettige oder verzweigte Alkyl- oder Cycloalkylgruppe ist, vorzugsweise $C_6$ bis $C_{22}$; $R_2$ die gleiche oder eine von $R_1$ verschiedene Alkylgruppe oder Wasserstoff ist; $M^+$ ein Alkalimetall oder Ammonium ist; und x mindestens 0,50, y 0,001 bis 0,05 und z 0,05 bis 0,4 ist; und weiterhin dadurch gekennzeichnet, daß die Grenzviskosität des in einer 2%-igen wäßrigen NaCl-Lösung gelösten Terpolymers größer als 12 dl/g ist.

7. Zusammensetzung, **dadurch gekennzeichnet,** daß sie ein Terpolymer gemäß Anspruch 6 enthält, das

in einer Natriumchloridlösung gelöst ist.

8. Zusammensetzung nach Anspruch 7, die 0,1 Gew.% Natriumchlorid enthält.

9. Zusammensetzung nach Anspruch 7 oder 8, die 0,001 bis 2 Gew.% des Terpolymers enthält.